# EUROPÄISCHE PATENTSCHRIFT

(11) **EP 1 696 224 B1**
(45) Veröffentlichungstag und Bekanntmachung des Hinweises auf die Patenterteilung: **17.09.2008**
(21) Anmeldenummer: 06110457.6
(22) Anmeldetag: 27.02.2006
(51) Int. Cl.: G01N 21/27, G01N 21/64

(54) **Verwendung eines Materials als Lumineszenzstandard zur Referenzierung von Lumineszenzsignalen**
The use of a material as a standard for referencing luminescence signals
L'utilisation d'un matériau comme standard pour le référencement de signaux de luminescence

(30) Priorität: 25.02.2005 DE 102005010774
(43) Veröffentlichungstag der Anmeldung: 30.08.2006
(73) Patentinhaber: BAM Bundesanstalt für Materialforschung und- Prüfung, 12205 Berlin (DE)
(72) Erfinder: Engel, Axel Dr., 55218 Ingelheim (DE); Ehrt, Doris Dr., 07747 Jena (DE); Hayden, Joseph S. Dr., Clarks Summit PA 18411 (US); Haspel, Rainer, 67590 Monsheim (DE); Kolberg, Uwe Dr., 55130 Mainz (DE); Stelzl, Michael, 55129 Mainz (DE); Resch-Genger, Ute Dr., 12203 Berlin (DE); Hoffmann, Katrin Dr., 12524 Berlin (DE)
(74) Vertreter: Reinstädler, Diane

(56) Entgegenhaltungen:
- US-A- 4 962 995
- US-B1- 6 429 162
- LURIN C ET AL: "Kinetic study of the neodymium fluorescence and of the Nd<3+>->Yb<3+> energy transfer in lithium lanthanum metaphosphate-like glasses" JOURNAL OF THE LESS-COMMON METALS SWITZERLAND, Bd. 126, Dezember 1986 (1986-12), Seiten 155-160, XP002393005 ISSN: 0022-5088
- REISFELD R ET AL: "Concentration dependence of energy transfer between chromium (III) and neodymium (III) in lithium-lanthanum-phosphate glasses" CHEMICAL PHYSICS LETTERS NETHERLANDS, Bd. 115, Nr. 4-5, 12. April 1985 (1985-04-12), Seiten 457-462, XP002393006 ISSN: 0009-2614
- BULOU A ET AL: "Non-destructive concentration measurements of rare earth ions in doped glasses" JOURNAL OF NON-CRYSTALLINE SOLIDS NETHERLANDS, Bd. 161, 1993, Seiten 231-234, XP002393007 ISSN: 0022-3093
- DEBAO ZHANG ET AL: "Spectroscopic properties of Er<3+>-doped Na2O-La2O3-Al2O3-SiO2 glasses" JOURNAL OF THE AMERICAN CERAMIC SOCIETY AMERICAN CERAMIC SOC USA, Bd. 87, Nr. 12, Dezember 2004 (2004-12), Seiten 2228-2231, XP002393008 ISSN: 0002-7820
- QIU GUANMING ET AL: "Study of fluorescent glass ceramics" PROCEEDINGS OF THE SPIE - THE INTERNATIONAL SOCIETY FOR OPTICAL ENGINEERING USA, Bd. 1513, 1991, Seiten 396-407, XP002393009 ISSN: 0277-786X
- SYTKO V ET AL: "Phosphate glasses with great concentration of uranyl and rare earth ions and its films for solar sell concentrators" PROCEEDINGS OF THE SPIE - THE INTERNATIONAL SOCIETY FOR OPTICAL ENGINEERING SPIE-INT. SOC. OPT. ENG USA, Bd. 2531, 1995, Seiten 272-280, XP002393010 ISSN: 0277-786X
- YAN Y ET AL: "Luminescence quenching by OH groups in highly Er-doped phosphate glasses" JOURNAL OF NON-CRYSTALLINE SOLIDS, NORTH-HOLLAND PUBLISHING COMPANY, AMSTERDAM, NL, Bd. 181, Nr. 3, Februar 1995 (1995-02), Seiten 283-290, XP004173448 ISSN: 0022-3093
- LANZERSTORFER S ET AL: "Photoluminescence at 1.5 [mu]m of heavily Er-doped insulating films on Si" SEMICONDUCTING AND INSULATING MATERIALS 1998. PROCEEDINGS OF THE 10TH CONFERENCE ON SEMICONDUCTING AND INSULATING MATERIALS (SIMC-X) (CAT. NO.98CH36159) IEEE PISCATAWAY, NJ, USA, 1998, Seiten 169-172, XP002393011 ISBN: 0-7803-4354-9
- SERNA R ET AL: "Optically active Er-Yb doped glass films prepared by pulsed laser deposition" JOURNAL OF APPLIED PHYSICS AIP USA, Bd. 84, Nr. 4, 15. August 1998 (1998-08-15), Seiten 2352-2354, XP002393012 ISSN: 0021-8979
- REISFELD R: "Inorganic ions in glasses and polycrystalline pellets as fluorescence standard reference materials" JOURNAL OF RESEARCH OF THE NATIONAL BUREAU OF STANDARDS, SECTION A (PHYSICS AND CHEMISTRY) USA, Bd. 76A, Nr. 6, November 1972 (1972-11), Seiten 613-635, XP009070166 ISSN: 0022-4332
- VELAPOLDI R A ET AL: "Quantum efficiencies and transition probabilities of Eu<3+> in silicate glasses" PHYSICS AND CHEMISTRY OF GLASSES UK, Bd. 14, Nr. 6, Dezember 1973 (1973-12), Seiten 101-106, XP009075749 ISSN: 0031-9090
- REISFELD R ET AL: "4f yields 4f TRANSITIONS AND CHARGE TRANSFER SPECTRA OF Eu<3plus>, 4f yields 5d SPECTRA OF Tb<3plus>, AND <1>S0 yields <3>P1 SPECTRA OF Pb<2plus>IN ALKALINE EARTH METAPHOSPHATE GLASSES" PHYS CHEM GLASSES JUN 1974, Bd. 15, Nr. 3, Juni 1974 (1974-06), Seiten 76-80, XP009075734
- GRATTAN K T V ET AL: "Doped glass absorption thermometer with fluorescent referencing" PROCEEDINGS OF THE SPIE - THE INTERNATIONAL SOCIETY FOR OPTICAL ENGINEERING USA, Bd. 566, 1985, Seiten 333-339, XP001248097 ISSN: 0277-786X
- BUCH A ET AL: "TRANSPARENT GLASS CERAMICS: PREPARATION, CHARACTERIZATION AND PROPERTIES" MATERIALS SCIENCE ENGINEERING, ELSEVIER SEQUOIA, LAUSANNE, CH, Bd. 71, 1985, Seiten 383-389, XP008036927 ISSN: 0025-5416
- EYAL M ET AL: "Laser properties of holmium and erbium in thorium-, zinc- and yttrium-based fluoride glass" CHEMICAL PHYSICS LETTERS NETHERLANDS, Bd. 139, Nr. 5, 4. September 1987 (1987-09-04), Seiten 395-400, XP002410026 ISSN: 0009-2614

## Beschreibung

Die Erfindung betrifft die Verwendung eines Materials als Lumineszenzstandard zur Referenzierung von Lumineszenzsignalen

Die Ergebnisse von Lumineszenzmessungen beinhalten neben den gewünschten Messdaten der Analyse auch geräteabhängige Beiträge, die eine Vergleichbarkeit von Lumineszenzmessdaten über Geräte- und Laborgrenzen sowie eine Langzeitvergleichbarkeit sehr erschweren oder nahezu unmöglich machen. Für die Vergleichbarkeit von Lumineszenzmessdaten im Spektralbereich, der von UV bis NIR (naher Infrarotbereich) reicht, ist eine Standardisierung der spektralen Parameter und der Sensitivitätsparameter von Lumineszenzmesssystemen notwendig. Darüber hinaus müssen typischerweise die Wellenlängenrichtigkeit und die Linearität der Detektionssysteme überprüft werden. Zur Lösung dieses Problems sind definierte Referenzsysteme wie zum Beispiel Lumineszenzstandards erforderlich. Die Standardisierung der spektralen Charakteristika von Lumineszenzmesssystemen kann dabei unabhängig von der Standardisierung der Sensitivitätsparameter erfolgen, die entweder Lumineszenzintensitätsstandards oder absolute Messungen der Lumineszenzintensität bzw. der Lumineszenzquantenausbeute erfordert. Alternativ zu physikalischen Transferstandards wie zum Beispiel Empfängernormalen zur Ermittlung der Wellenlängenabhängigkeit der spektralen Beleuchtungsstärke des Anregungskanals von Standardlampen bzw. Strahldichtenormalen zur Ermittlung der Wellenlängenabhängigkeit der spektralen Empfindlichkeit des Emissionskanals, können zur spektralen Charakterisierung von Lumineszenzmesssystemen auch chemische Transfernormale bzw. so genannte Lumineszenzstandards eingesetzt werden. Dabei sind für die auf die radiometrischen Primärnormale "schwarzer Strahl" und/oder Kryoradiometer-rückführbare Standardisierung der spektralen Charakteristika von Lumineszenzmesssystemen spektrale Lumineszenzstandards mit (für gerätespezifische Einflüsse) korrigierten "technischen" Lumineszenzspektren, angegebenen relativen oder normierten Lumineszenzintensitäten, ausreichend.

Neben spektralen Standards und Intensitätsstandards sind einfach handhabbare und möglichst langzeitstabile Standards für die Charakterisierung und Überprüfung der Wellenlängenrichtigkeit, zur Charakterisierung der Day-To-Day-Performance und zur Erfassung der Gerätealterung (spektrale Effekte und Sensitivität) notwendig. Zu den Anforderungen, die Standards zur Referenzierung von Lumineszenzsignalen (im Folgenden "Lumineszenzstandards") gestellt werden, gehören, je nach dem speziellen Anwendungsgebiet unter anderem
- je nach Zusammensetzung Lumineszenz im UV- bis NIR-Spektralbereich,
- für spektrale Standards möglichst breite, unstrukturierte Lumineszenzspektren,
- eine hohe und bekannte Reinheit,
- eine möglichst geringe Überlappung zwischen Absorptions- und Emissionsspektren,
- eine wellenlängenunabhängige Quantenausbeute der Lumineszenz (im für die Gerätecharakterisierung verwendeten Spektralbereich),
- eine isotrope Emission,
- eine geringe Variation der Intensität an einer statistisch relevanten Anzahl von Messpunkten, d.h. eine hohe Homogenität,
- eine möglichst geringe und/oder bekannte Temperaturabhängigkeit der Lumineszenz im relevanten Bereich der Umgebungstemperatur,
- Lumineszenzlebensdauern im Bereich von Nanosekunden, Mikrosekunden oder Millisekunden (für Lebensdauerstandards),
- möglichst viele schmale Banden im UV- bis NIR-Spektralbereich (für Wellenlängenstandards, Day-To-Day-Performance, Langzeitstabilität, Intensitätsstandards),
- eine bekannte und hinreichende Langzeitstabilität (thermisch und photochemisch),
- eine hohe Reproduzierbarkeit bei "Single Use-Standards",
- eine Möglichkeit zur Messung von Probe- und Transferstandard unter identischen Messbedingungen (zum Beispiel auch identische Messparameter und Messgeometrie, Probenformate, wie Küvette, Slide, Mikrotiterplatte), bei vergleichbaren Signalintensitäten/Photonenzellraten, mit möglichst ähnlichen Emissionscharakteristika.

Um Lumineszenzeigenschaften, die im Allgemeinen in willkürlichen und relativen Einheiten gemessen werden, vergleichbar zu machen, sind im Stand der Technik Lumineszenzstandards bekannt geworden, die jedoch vielfach nicht eine ausreichende Langzeitstabilität, Homogenität oder Isotropie aufweisen oder die giftige oder umweltschädliche Materialien, wie etwa Cadmium oder Uran enthalten.

So ist etwa aus der US-A-4302678 ein Standard zur Kalibrierung eines im UV-Bereich scannenden Systems bekannt, das zur Detektion von Oberflächenfehlern an Werkstücken verwendet wird. Der Standard besteht aus einem gelben Kalium-Borosilikatglas, das Uranoxid enthält. Die Verwendung von Uranoxid wird wegen der damit zusammenhängenden notwendigen Sicherheitsmaßnahmen und Umweltschutzproblematik als nachteilig angesehen. Darüber hinaus weist ein derartiger Standard nicht die notwendige Photostabilität und Langzeitstabilität auf.

Aus der WO-A-0106227 sind Standards zur Referenzierung von Fluoreszenzsignalen bekannt, die Sol-Gel-Gläser, andere Gläser oder Polymere aufweisen, in denen lumineszierende Mikro- oder Nanopartikel aufgenommen sind. Es handelt sich hierbei insbesondere um lumineszierende Nanopartikel aus Polymeren und Metall-Liganden-Komplexen von Ruthenium, Osmium, Rhenium, Iridium, Platin oder Palladium.

Aus der EP-B-0926102 ist ein lumineszierendes Glas mit langer Nachleuchtdauer bekannt, das als Nachtleuchte, Nachtsignal, Material zur Bestätigung eines Infrarotlasers oder dergleichen verwendbar ist. Es handelt sich um ein Oxidglas, das bei Anregung durch Strahlung wie Gammastrahlen, Röntgenstrahlen oder UV-Strahlen lang anhaltendes Nachleuchten und photostimulierte Lumineszenz aufweisen kann, wobei das Glas 1 bis 55 Gew.-% SiO₂, 1 bis 50 Gew.-% B₂O₃, 30 bis 75 Gew.-% ZnO, weitere optionale Bestandteile und Terbium oder Mangan als Fluoreszenzmittel enthält.

Ein derartiges Glas ist jedoch nicht als Lumineszenzstandard verwendbar.

Als Filtergläser sind eine Reihe von Farbgläsern bekannt, die als Steilkantenfilter verwendet werden können. Hierzu gehören die DE-B-10141104, aus der ein optisches Farbglas für ein Steilkantenfilter bekannt ist, das 30 bis 75 Gew.-% SiO₂, 5 bis 35 Gew.-% K₂O, 0 bis 5 Gew.-% TiO_{2,} 4 bis 7 Gew.-% B₂O_{3,} 5 bis 30 Gew.-% ZnO, 0,01 bis 10 Gew.-% F, sowie 0,1 bis 3 Gew.-%, Kupfer, Silber, Indium, Gallium, Aluminium, Yttrium, Schwefel, Selen oder Tellur enthalten kann. Hierbei handelt es sich um ein Farbanlaufglas, in dem durch kolloidale Ausscheidung von Halbleiterverbindungen beim Abkühlen der Schmelze oder durch nachträgliche Wärmebehandlung die Färbung erzeugt wird.

Weitere Farbgläser ähnlicher Art sind aus der DE-B-10141101 und aus der DE-A-2621741 bekannt.

Aus der US-A-3773530 ist ein weiteres Farbglas für einen Filter bekannt, das Cadmiumsulfid als färbenden Bestandteil enthält.

Derartige Farbgläser weisen keine ausreichend hohe Photostabilität auf, um als Lumineszenzstandards verwendet zu werden.

Lumineszenzstandards mit fluoreszierenden Polymerschichten auf einem nicht fluoreszierenden Träger sind aus der WO-A-02077620 bekannt.

Aus der WO-A-0159503 ist ein Lumineszenzstandard mit einem Substrat etwa aus Quarz bekannt, auf dem eine strukturierte Oberfläche aus fluoreszierendem Material aufgebracht ist.

Aus der DE 202004002064 U1 ist ein Mikroray-Träger bekannt, der ein im Wesentlichen nicht fluoreszierendes Substrat als Träger und mindestens einen Standard für Fluoreszenzmessungen enthält, der ein Farbglas aufweist. Das Farbglas enthält Halbleiterverbindungen, bei denen es sich um Cadmium-Halbleiterverbindungen oder um Kupfer-, Silber-, Indium-, Gallium-, Aluminium-, Schwefel-, oder Selen-Halbleiterverbindungen handeln kann. Die Farbgläser enthalten 30 bis 75 Gew.-% SiO₂, 5 bis 35 Gew.-% K₂O, 0 bis 5 Gew.-% TiO₂, 0,01 bis 10 Gew.-% Fluor und 0,1 bis 3 Gew.-% an M'M"'Y"₂, wobei M' Cu⁺ und/oder Ag⁺ ist, M'" ln³⁺ und/oder Ga³⁺ und/oder Al³⁺ ist und Y" S²⁻ und/oder Se²⁻ ist. Die fluoreszierenden Halbleiterverbindungen sind als kolloidale in Glas verteilte Nanokristalle ausgebildet.

Der Artikel "Inorganic ions in glasses and polycrystalline pellets as fluorescence standard reference materials"; Reisfeld R; 22-24 März 1972; Journal of Research of the National Bureau of Standards, Section A, Vol 76A, Nr. 62 offenbart die Verwendung eines Lumineszenzmaterials mit einem Basismaterial aus einem Glas oder einer Glaskeramik, das mit einem Seltenerdmetall oder einem Buntmetall dotiert ist, als Lumineszenzstandard, wobei das Metall Europium, Gadolinium, Tellur, Samarium, Thulium, Thallium, Blei, Cer oder Kupfer ist und die Glasmatrix aus einem Borat, Silikat oder Phosphat besteht.

Darüber hinaus besteht jedoch ein Bedürfnis an höherwertigen Standards, die sich durch eine besonders hohe Qualität auszeichnen, also insbesondere eine hohe Homogenität und Isotropie aufweisen, eine geringe Temperaturabhängigkeit und eine Langzeitstabilität und Photostabilität. Mit derartigen Standards könnten auch weitergehende Anforderungen erfüllt werden, wie z.B. eine Überprüfung der spektralen Empfindlichkeit und Wellenlängenrichtigkeit. Auch könnte die Zeitachse bei zeitaufgelösten Lumineszenzmessungen geprüft werden.

Die im Stand der Technik bekannten Farbgläser werden erwiesenermaßen derartigen Anforderungen nicht gerecht, da sie nicht photostabil sind. Auch die übrigen im Stand der Technik bekannten Lumineszenzstandards weisen keine ausreichende Qualität auf.

Der Erfindung liegt somit die Aufgabe zugrunde, die Verwendung eine Materials als Lumineszenzstandard zur Referenzierung von Lumineszenzsignalen (Lumineszenzstandard) anzugeben der die Nachteile des Standes der Technik möglichst vermeidet und eine möglichst hohe Qualität aufweist.

Diese Aufgabe wird durch die obengennante Verwendung gelöst, mit einem Lumineszenzstandard mit einem optisch transparenten Basismaterial aus einem Lanthan-Phosphat-Glas, einem Fluor-Phosphat-Glas, einem Fluor-Kronglas, einem Lanthanglas, einer daraus gebildeten Glaskeramik oder aus einer Lithium-Aluminosilikat-Glaskeramik, wobei das Basismaterial eine Volumendotierung mit einem Seltenerdmetall und/oder einem Buntmetall, insbesondere Kobalt, Chrom oder Mangan, enthält, die fluoreszierend oder lumineszierend ist.

Die Aufgabe der Erfindung wird auf diese Weise vollkommen gelöst.

Eine erfindungsgemäße Verwendung zeichnet sich durch eine besonders gute Homogenität, Isotropie, Langzeitstabilität und Photostabilität des Lumineszenzstandards aus.

Der beider erfindungsgemäßen Vewendung benutzte Standard kann aufgrund seiner hohen Qualität für die unterschiedlichsten Anwendungen eingesetzt werden. So kann er etwa als Lumineszenzstandard für die Charakterisierung der Langzeitstabilität von Lumineszenzmesssystemen verwendet werden. Weiterhin ist ein Einsatz als Wellenlängenstandard, als Lumineszenzintensitäts- und Lumineszenzlebensdauerstandard für den Spektralbereich von UV bis NIR und zur Vergleichbarkeit und Standardisierung von Lumineszenzmessdaten ermöglicht. Dabei können Aussagen zur Änderung der spektralen Empfindlichkeit des Detektionssystems und der Wellenlängenrichtigkeit, zur Ermittlung und Charakterisierung der Wellenlängenrichtigkeit, zur Kalibrierung von Lumineszenzintensitäten und zur Charakterisierung und Kalibrierung von Lumineszenzmesssystemen mit zeitaufgelöster Lumineszenzdetektion im UV- bis NIR-Spektralbereich getroffen werden. Der erfindungsgemäß Verwendete Standard eignet sich ferner als Bezugssystemen bzw. Standard zur Charakterisierung der (Eigen-)Lumineszenz von Materialien im UV- bis NIR-Spektralbereich von 250 bis 1700 nm.

Die Lebensdauer-/Abklingzeiten lassen sich durch Vorgabe des Basismaterials, durch die Konzentration der Dotierung und durch Redox-Prozesse "einstellen".

Die Absorptions- und Emissionswirkungsquerschnitte lassen sich in weiten Grenzen variieren, insbesondere wenn als Basismaterial eine Glaskeramik verwendet wird.

Im Gegensatz zum Stand der Technik bekannten Farbgläser sind die Kristallite bei der erfindungsgemäß verwendeten Glaskeramik (zum Beispiel dotiertes Robax®) > als 10 nm. Die fluoreszierende Dotierung wird beim erfindungsgemäß verwendeten Standard nicht kolloidal wie bei im Stand der Technik bekannten Standards eingebaut.

Werden Dotierungen mit Buntmetallen verwendet, so ergeben sich breite, unstrukturierte Emissionsbanden und die Standards können bis in den NIR-Bereich angewendet werden (zum Beispiel bei Dotierungen mit Cr³⁺). Im Stand der Technik war bislang kein spektraler Fluoreszenzstandard für den NIR-Bereich bekannt.

Werden Dotierungen mit seltenen Erden verwendet, so ergeben sich scharfe Linienspektren, die zum Beispiel zur Wellenlängenkalibrierung bzw. zur Überprüfung der Wellenlängenrichtigkeit und zur Bestimmung der spektralen Auflösung von Lumineszenzmesssystemen herangezogen werden können.

Die erfindungsgemäß verwendeten Lumineszenzstandards können für verschiedene Messgeometrien und -formate hergestellt werden, also zum Beispiel in Küvettenform, in Slideform als Mikroplates und dergleichen mehr.

Durch eine Variation der Dotierungskonzentration kann die Fluoreszenzintensität in geeigneter Weise beeinflusst werden.

Gemäß einer weiteren Ausgestaltung der Erfindung ist das Basismaterial ein Lanthan-Phosphat-Glas, das 30 bis 90 Gew.-% P₂O₅, vorzugsweise 50 bis 80 Gew.-%, besonders bevorzugt 60 bis 75 Gew.-% P₂O₅, sowie Läutermittel in üblichen Mengen enthält.

Weiterhin kann das Lanthan-Phosphat-Glas, 1 bis 30 Gew.-% La₂O_{3,} vorzugsweise 5 bis 20 Gew.-%, besonders bevorzugt 8 bis 17 Gew.-% La₂O₃ enthalten.

Ferner enthält das Basismaterial bevorzugt 1 bis 20 Gew.-% Al₂O₃, vorzugsweise 5 bis 15 Gew.-% Al₂O₃ sowie 1 bis 20 Gew.-% R₂O (Alkalioxide), wobei es sich bevorzugt um 1 bis Gew.-% K₂O, vorzugsweise 5 bis 15 Gew.-% K₂O handeln kann.

Gemäß einer weiteren Ausgestaltung der Erfindung ist das Basismaterial mit einer Dotierung aus Cr₂O₃, vorzugsweise mit 0,01 bis 5 Gew.-%, besonders bevorzugt mit 0,02 bis 2 Gew.-% Cr₂O₃ versehen.

Gemäß einer weiteren Ausgestaltung der Erfindung ist das Basismaterial mit einer Dotierung versehen, die Ce₂O₃, Eu₂O₃, Tb₂O₃ oder Tm₂O₃ enthält.

Handelt es sich bei dem Basismaterial um ein Fluor-Phosphat-Glas, so enthält dieses bevorzugt 5 bis 40 Gew.-% P₂O₅ und einen Fluoridgehalt von 60 bis 95 Gew.-%.

Ein derartiges Basismaterial wird bevorzugt mit 0,01 bis 5 Gew.-%, vorzugsweise mit 0,05 bis 2 Gew.-% an Er₂O₃ und/oder Eu₂O₃ dotiert.

Beispielsweise kann das Basismaterial hierbei mit 0,05 bis 0,3 Er₂O₃ und 0,5 bis 2 Gew.-% Eu₂O₃, vorzugsweise mit etwa 0,1 Gew.-% Er₂O₃ und etwa 1 Gew.-% Eu₂O₃ dotiert sein.

Ferner können als Basismaterial erfindungsgemäß optische Fluor-Krongläser, insbesondere FK-52 oder FK51 (Handelsnamen von Schott), oder ein Lanthanglas, insbesondere LAK-8 (Handelsname von Schott) verwendet werden.

Hierbei kann das Basismaterial beispielsweise ein optisches Glas sein, das 0,5 bis 2 Gew.-% La₂O₃, 10 bis 20 Gew.-% B₂O₃, 5 bis 25 Gew.-% SiO₂, 10 bis 30 Gew.-% SrO, 2 bis 10 Gew.-% CaO, 10 bis 20 Gew.-% BaO, 0,5 bis 3 Gew.-% Li₂O, 1 bis 5 Gew.-% MgO, 20 bis 50 % Gew.-% F und Läutermittel in üblichen Mengen enthält.

Ist das Basismaterial als Lanthanglas ausgebildet, so kann es beispielsweise 30 bis 60 Gew.-% La₂O₃, 30 bis 50 Gew.-% B₂O₃, 1 bis 5 Gew.-% SiO₂, 1 bis 15 Gew.-% ZnO, 2 bis 10 Gew.-% CaO und Läutermittel in üblichen Mengen enthalten.

Derartige Fluor-Krongläser oder Lanthangläser werden bevorzugt mit 3 bis 100 ppm an Buntmetallen, vorzugsweise an Kobalt, Chrom und/oder Mangan dotiert.

Des Weiteren kann als Basismaterial eine Glaskeramik, insbesondere eine Lithium-Aluminosilikat-Glaskeramik verwendet werden, wie etwa die transparenten Glaskeramiken Robax® (Schott-interne Bezeichnung 87213) oder Cleartrans® (Schott-interne Bezeichnung 87233). Hierzu wird vorzugsweise eine Dotierung verwendet, die Eu₂O_{3,} Er₂O₃ und/oder Sm₂O₃ enthält.

Besonders bevorzugt enthält die Dotierung hierbei 0,1 bis 5 Gew.-% Eu₂O_{3,} 0,01 bis 0,5 Gew.-% Er₂O₃ und/oder 0,1 bis 2 Gew.-% Sm₂O_{3.}

Das Basismaterial ist in bevorzugter Weiterbildung der Erfindung aus Rohstoffen hergestellt, die höchstens 100 ppm an seltenen Erden enthalten.

Ferner weist das Basismaterial bevorzugt einen Wassergehalt von weniger als 0,1 1 Gew.-%, vorzugsweise von weniger als 0,01 Gew.-% auf.

Dadurch können Quenching- und Auslöschungseffekte ausgeschlossen werden.

Der erfindungsgemäß verwendete Standard kann gemäß einer weiteren Ausgestaltung der Erfindung als selbsttragender Körper ausgebildet sein, also insbesondere im Küvetten-Format (bevorzugt 12 x 12 x 50 mm oder kleiner), im Mikrotiterplattenformat und Objektträgerformat (bevorzugt 75 x 25 x 1 mm oder kleiner), oder als Kapillare hergestellt sein.

Daneben ist es grundsätzlich möglich, für spezielle Anwendungen auch einen Standard mit einem Substrat aus einem im Wesentlichen nicht fluoreszierenden oder lumineszierenden Material herzustellen, auf dem das Basismaterial mit der Dotierung aufgebracht ist.

Hierbei kann das Basismaterial mit der Dotierung als durchgehende Beschichtung auf dem Substrat aufgenommen sein.

Dagegen ist es auch möglich, das Basismaterial mit der Dotierung als strukturierte Beschichtung auf dem Substrat aufzubringen.

Derartige Standards mit einem Substrat aus einem nicht fluoreszierenden oder lumineszierenden Material, mit einer Beschichtung aus einem optisch transparenten Basismaterial aus Glas oder Glaskeramik, das eine Dotierung mit mindestens einem Bestandteil, der fluoreszierend oder lumineszierend ist, aufweist, können hergestellt werden, indem das Basismaterial mit der Dotierung verdampft und auf dem Substrat abgeschieden wird.

Hierbei kann das Basismaterial mit der Dotierung als Target verwendet werden, das mittels eines Elektronenstrahls lokal verdampft und auf dem Substrat abgeschieden wird.

Ist es gewünscht, eine strukturierte Beschichtung zu erzielen, so kann das Substrat vor der Abscheidung mittels einer Maskierung versehen werden, die nach der Beschichtung zumindest teilweise wieder entfernt wird, wie dies grundsätzlich aus der WO-A-03088340 bekannt ist.

Hierbei können die Verdampfung und Abscheidung durch Plasma-Ionen unterstützt werden.

Das Verfahren zur Verdampfung und Abscheidung des dotierten Basismaterials auf einer Substratoberfläche ist nicht auf die vorstehend erwähnten Materialien beschränkt, sondern kann grundsätzlich auch bei anderen Standards durchgeführt werden, die aus beliebigen geeigneten Materialien bestehen.

Es versteht sich, dass die vorstehend genannten und die nachstehend noch zu erläuterten Merkmale der Erfindung nicht nur der jeweils angegebenen Kombination, sondern auch in anderen Kombinationen oder in Alleinstellung verwendbar sind ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: die Ergebnisse eines Bestrahlungstests eines erfindungsgemäß verwendeten Glases im Vergleich zu einem herkömmlichen Farbglas, wobei die In-tensität über der Bestrahlungsdauer aufgetragen ist;
- Fig. 2: die Emissionsspektren eines erfindungsgemäß verwendeten Lanthan-Phosphatglases, das mit mehreren seltenen Erden dotiert ist, im Vergleich zu einem herkömmlichen Uranyl-Glas und zu herkömmlichen T-Phernylbutadien in PMMA, jeweils unbestrahlt, nach 30-minütiger Bestrahlung mit UV und nach 60-minütiger Bestrahlung mit UV, wobei die Intensität in willkürlichen Einheiten über der Wellenlänge in Nanometer aufgetragen ist;
- Fig. 3: zeigt das Ergebnis von Messungen zum Nachweis der guten Homogenität und Anisotropie an einem erfindungsgemäß verwendeten FluorPhosphat-Glas, das mit 1 % Erbiumoxid dotiert ist, wobei die Intensität über der Wellenlänge aufgetragen ist;
- Fig. 4: zeigt ein Fig. 3 entsprechendes Diagramm eines Fluor-Phosphat-Glases, das mit 1 Gew.-% Eu₂O₃ dotiert ist, wobei wiederum die Intensität über der Wellenlänge aufgetragen ist;
- Fig. 5: zeigt eine Fig. 3 entsprechende Darstellung zum Nachweis der guten Anisotropie und Homogenitätseigenschaften an einem Lanthan-Phosphat-Glas, das mit Eu₂O₃ dotiert ist. Und
- Fig. 6: zeigt die Ergebnisse von Messungen zur Prüfung der Anisotropie an dem Glas gemäß Fig. 5.

### Beispiel 1

Die Zusammensetzungen verschiedener Lanthan-Phosphat-Gläser, die mit Cr₂O₃ einzeln dotiert werden oder mit seltenen Erd-Ionen mehrfach dotiert werden, sind in Tabelle 1 zusammengefasst.

**Tab. 1**

| OXIDE | Gewichts-% | Gewichts- % | Gewichts-% | Gewichts-% | Gewichts-% |
|---|---|---|---|---|---|
| Probe | A | B | C | D | E |
| Al₂O₃ | 8,498 | 8,774 | 8,857 | 8,498 | 8,498 |
| P₂O₅ | 68,378 | 70,593 | 71,267 | 68,378 | 68,378 |
| K₂O | 9,316 | 6,328 | 6,388 | 9,316 | 9,316 |
| La₂O₃ | 13,808 | 14,256 | 10,669 | 13,808 | 13,808 |
| Ce₂O₃ | | | 0,126 | 0,13 | 1,21 |
| Eu₂O₃ | | | | 1,24 | 1,23 |
| Tb₂O₃ | | | 2,693 | 2,63 | 2,62 |
| Cr₂O₃ | | 0,050 | | | |
| Tm₂O₃ | | | | | 1,02 |

### Beispiel 2

Es werden Fluor-Phosphat-Gläser verwendet, die einen P₂O₅-Gehalt von 5 bis 40 Gew.-%, und einen Fluoridgehalt von 60 bis 96 Gew.-% aufweisen. Es werden Einzeldotierungen von etwa 0,1 Gew.-% Er₂O₃ und etwa 1 Gew.-% Eu₂O₃ verwendet.

### Beispiel 3

Optische Fluor-Krongläser FK-52, FK-53 und Lanthanglas LAK-8 werden mit Buntmetallen dotiert, und zwar im Bereich zwischen 3 und 100 ppm mit Kobalt, Chrom und/oder Mangan.

Es ergibt sich eine breitbandige Emission (420 <λ < 850 nm) in dem für die Bioanalytik relevanten Anregungsbereich von 400 bis 750 nm. Die Zusammensetzungen der Fluor-Krongläser FK51 und FK52 sowie des Lanthanglases LAK-8 sind in Tabelle 2 dargestellt.

**Tab. 2**

| Oxide | Gew.-% | Gew.-% |
|---|---|---|
| Glas | FK51 / FK52 | LAK-8 |
| La₂O₃ | 0,5-2% | 30-60% |
| B₂O₃ | 10 - 20 % | 30 - 50 % |
| SiO₂ | 5-25% | 1-5% |
| SrO | 10-30% | |
| CaO | 2-10% | 2-10% |
| BaO | 10 - 20 % | |
| Li₂O | 0,5 - 3 % | |
| MgO | 1 - 5 % | |
| F | 20 - 50 % | |
| ZnO | | 1-15% |

### Beispiel 4

Es wird eine Lithium-Aluminium-Glaskeramik (LAS-Glaskeramik) mit seltenen Erden dotiert. Hierzu kann insbesondere die von Schott unter der Marke Ceran® vertriebene LAS-Glaskeramik verwendet werden.

Hierbei können beispielsweise etwa 0,1 bis 5 Gew.-% Eu₂O₃, 0,01 bis 0,5 Gew.-% Er₂O₃ und/oder 0,1 bis 2 Gew.-% Sm₂O₃ zugesetzt werden.

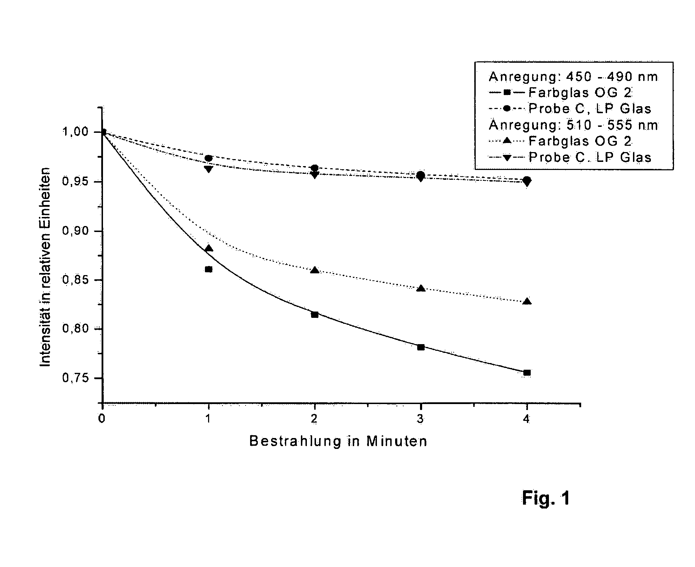

Die Ergebnisse von verschiedenen Untersuchungen zum Nachweis der Photostabilität, Homogenität und Anisotropie an verschiedenen erfindungsgemäß verwendeten Gläsern werden im Folgenden anhand der Figuren 1 bis 6 näher erläutert.

Fig. 1 zeigt den Nachweis der Photo-Stabilität am Glas C gemäß Tabelle 1 im Vergleich zu dem herkömmlichen Farbglas OG2 (52 Gew.-% SiO_{2,} 22,5 Gew.-% K₂O, 3,9 Gew.-% B₂O_{3,} 19,5 Gew.-% ZnO, 1,2 Gew.-% CdS, 0,63 Gew.-% Na₂SeO₃ und 0,1 Gew.-% Cd).

Es wurde eine Bestrahlung mit einer Xenon-Lampe in den Spektralbereichen 450 bis 490 bzw. 510 bis 555 nm durchgeführt.

Während das erfindungsgemäß verwendete Lanthan-Phosphatglas mit SEE-Dotierung auch nach 4 Minuten Bestrahlungsdauer einen Intensitätsabfall von weniger als 5 % aufweist, zeigt das herkömmliche Farbglas OG2 schon nach kurzer Zeit einen starken Intensitätsabfall.

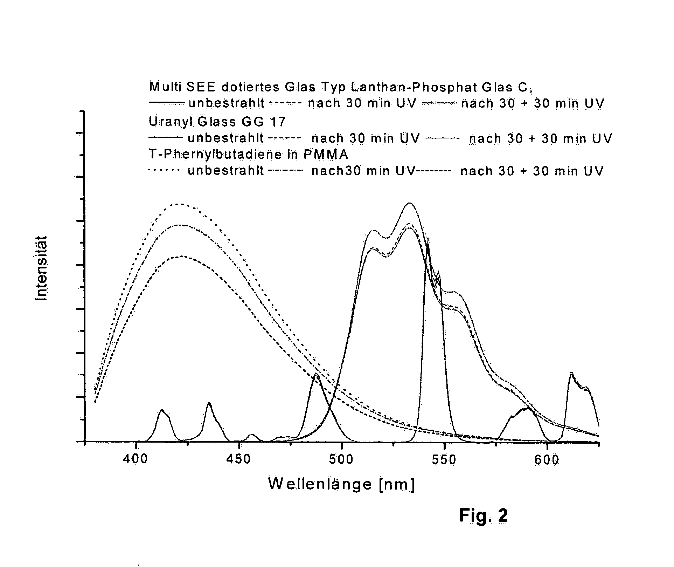

Fig. 2 zeigt die Ergebnisse einer Bestrahlung mit einer 10W-Lampe HOK-4, die bei 365 nm abstrahlt, mit anschließender Anregung bei 365 nm. Zum Vergleich ist das mehrfach dotierte SEE-Lanthan-Phosphatglas C (Tab. 1) sowie ein Uranyl-Glas GG17 und ein T-Phernylbutadien in PMMA dargestellt. Die gemessene Intensität ist in willkürlichen Einheiten über der Wellenlänge gezeigt.

Aus der Darstellung ist zu erkennen, dass das polymere fluoreszierende Material mit T-Phernylbutadien in PMMA einen deutlichen Abfall der Intensität nach Bestrahlung zeigt (vgl. Maximum bei ca. 425 nm). Auch das Uranyl-Glas GG17, das sein Maximum bei ca. 540 nm hat, zeigt nach Bestrahlung einen merklichen Intensitätsabfall, ist also nicht photostabil.

Der erfindungsgemäß verwendete Standard (Probe C gemäß Tabelle 1) zeigt eine Reihe von ausgeprägten Intensitätsmaxima bei ca. 415, 435, 480, 550, 580 und etwa 620 nm. Zwischen dem unbestrahlten Zustand und dem Zustand nach 30 bzw. 60-minütiger Bestrahlung sind praktisch keine Intensitätsunterschiede erkennbar.

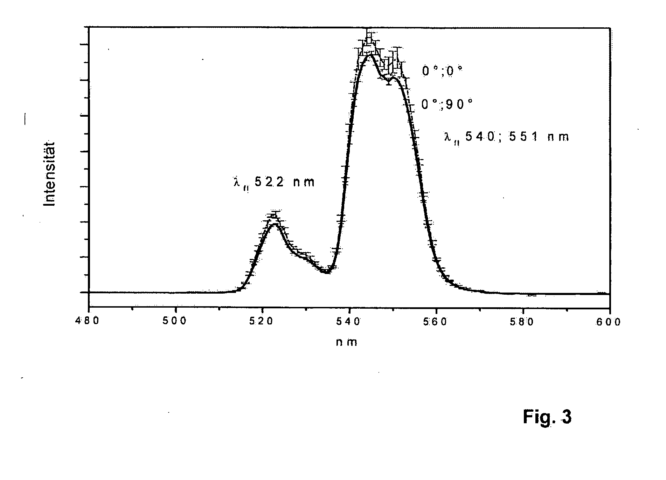

Fig. 3 zeigt das Ergebnis der Prüfung der Anisotropie und Homogenität an einem Fluor-Phosphatglas mit einer Einzeldotierung von etwa 1 Gew.-% Er³⁺. Die Glaszusammensetzung war wie folgt (in Mol-%): 35 % AlF₃, 15 % SrF₂, 30 % CaF₂, 10 % MgF_{2,} 20 % P₂O_{5.}

Die Anregung erfolgte bei 378 nm, und es wurde bei 0° (Reflexion) und 90° gemessen. Die Messung wurde Untergrund- und Spektralkorrigiert. Die Homogenität wurde anhand von vier Messpunkten überprüft (N=4). Aus der Darstellung der Intensität (in willkürlichen Einheiten) über der Wellenlänge zeigt sich anhand der Fehlerbalken, dass insgesamt die Anisotropie sehr gering ist (0,02732) und die Homogenität sehr gut ist. In der Darstellung sind zusätzlich die gemessenen Wellenlängenmaxima bei 522, 540 und 551 nm angegeben.

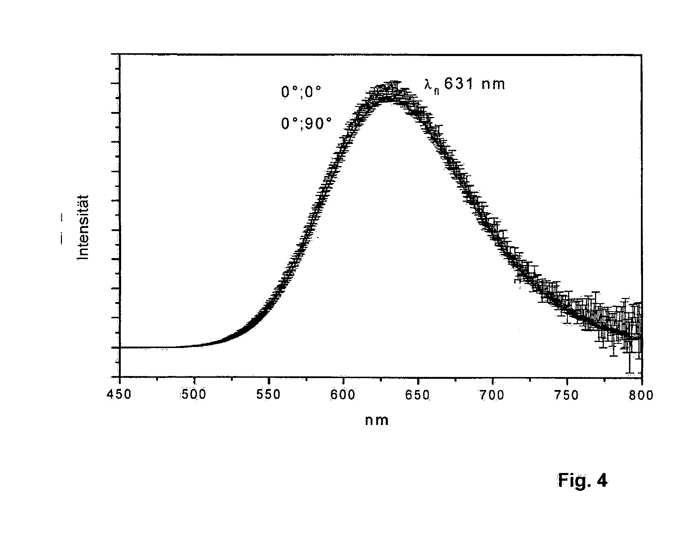

Fig. 4 zeigt eine entsprechende Untersuchung zur Homogenität und Anisotropie an einem Fluor-Phosphatglas, das mit 1 Gew.-% Eu³⁺ dotiert ist. Die Anregung erfolgte bei 404 nm. Es wurde bei 0° und 90° (Reflexion) gemessen. Die Messung wurde Untergrund- und Spektralkorrigiert. Die Anisotropie wurde mit 0,01407 bestimmt. Die Homogenität wurde an vier Messpunkten geprüft.

Wiederum zeigt sich eine sehr gute Anisotropie und Homogenität.

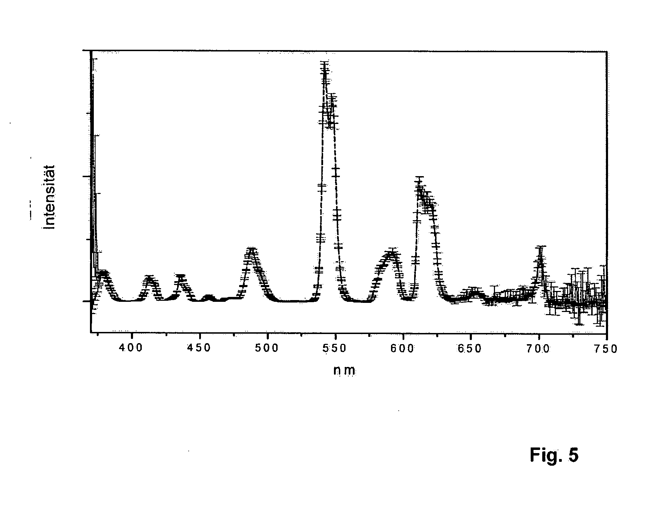

Fig. 5 zeigt eine entsprechende Untersuchung an einem Lanthan-Phosphatglas gemäß Probe C (vgl. Tabelle 1). Die Anregung erfolgte bei 365 nm. Es wurde bei 0° und 90° (Reflexion) gemessen. Die Messung wurde Untergrund- und Spektralkorrigiert. Die Anisotropie wurde mit 0,00783 bestimmt. Die Homogenität wurde an vier Messpunkten geprüft.

Auch hierbei zeigt sich eine sehr geringe Anisotropie und eine sehr gute Homogenität.

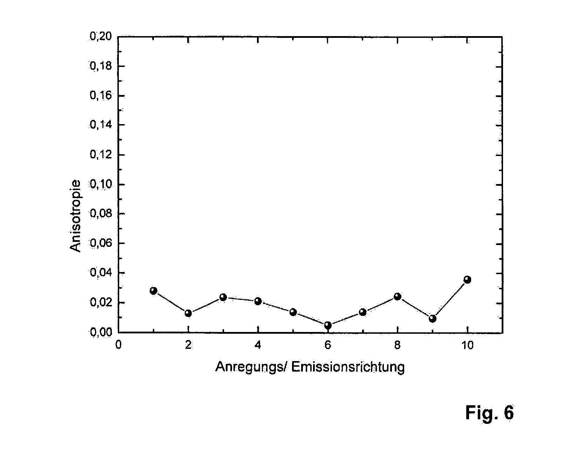

Fig. 6 zeigt schließlich die Messung der Anisotropie an dem Lanthan-Phosphat-glas Probe C (vgl. Tabelle 1) in Abhängigkeit von der Anregungs-/Emissionsrichtung. Hierbei wurde wie folgt gemessen: Es wurden Messungen bei 0° (Normalfall) und 90° durchgeführt. Die Messung der Emission erfolgte dabei bei 0° (Messpunkt 1) oder 90° (Messpunkt 3) bzw. unter 0° (Messpunkt 2) oder 180° (Messpunkt 4). Zusaätzlich wurde noch an verschiedenen Höhen-Positionen der Probe gemessen (Messpunkte 5 und 7 bzw. 6 und 8). Messpunkte 9 und 10 stellen die Anisotropiemessungen für die Anordnung 0-180°, d.h. in Transmission, dar. Die Anisotropiewerte ergeben sich dann (in willkürlichen Einheiten) relativ zur klassischen 0-90° Anordnung (Anregung/Emission).

Auch dies zeigt wiederum eine sehr gute Isotropie des untersuchten Materials.

Die Herstellung der erfindungsgemäß verwendeten Standards kann im Wesentlichen gemäß dem Fachmann bekannter Verfahren erfolgen, wobei besonders reine Ausgangsmaterialien verwendet werden (weniger als 100 ppm seltene Erden) und die Gläser "trocken" erschmolzen werden, so dass der Wassergehalt bevorzugt kleiner als 0,01 Gew.-% ist.

Die verwendeten lumineszierenden oder fluoreszierenden Bestandteile (Fluorophore) können dem Basismaterial beim Erschmelzen des Glases als Oxide oder Fluoride zugeführt werden.

Die bekannten Herstellungsverfahren beginnen mit dem Schmelzen der Glaszusammensetzung (wobei hier die Schritte Einschmelzen des Gemenges, Läutern, Homogenisieren und Konditionieren erfasst sind). Das Einschmelzen erfolgt in keramischen Tiegeln (Häfen) bei Temperaturen von etwa 1100 bis etwa 1550 °C, vorzugsweise im Bereich von etwa 1200 bis 1360 °C. Das Blankschmelzen (Läutern) erfolgt vorzugsweise bei etwas geringerer Temperatur, beispielsweise bei etwa 1200 bis 1400 °C. Nach einer Abstehphase wird die Temperatur üblicherweise abgesenkt, um die Schmelze zu homogenisieren. Der Guss erfolgt typischerweise zwischen etwa 950 und 1050 °C in eine geignete Form.

Soweit es sich um eine LAS-Glaskeramik handelt, so erfolgt eine für derartigen Glaskeramiken bekannte Temperaturbehandlung zur Keimbildung und anschlie-βenden Keramisierung.

Für besonders hohe Qualitätsansprüche kann das Erschmelzen in Platintiegeln oder mit Platin ausgekleideten Keramiktiegeln erfolgen, um eine besonders hohe Reinheit zu gewährleisten.

Soll ein volumendotiertes Basismaterial als Beschichtung auf einem im Wesentlichen nicht fluoreszierenden oder lumineszierenden Träger abgeschieden werden, so kann hierbei eine Verdampfung und anschließende Abscheidung erfolgen, wie es grundsätzlich aus der WO-A-03087424 und der WO-A-03088340 bekannt ist.

Hierzu kann ein Elektronenstrahlerzeuger mit einer Strahlumlenkeinrichtung und einem Glastarget verwendet werden, das von einem Elektronenstrahl getroffen wird. An der Auftreffstelle des Elektronenstrahls verdampft das Glas und schlägt sich auf dem zu beschichtenden Substrat nieder. Um das Glas des Targets möglichst gleichmäßig verdampfen zu lassen, wird das Target gedreht und der Elektronenstrahl gewobbelt. Zusätzlich kann die Anordnung noch eine Plasmaquelle zur Erzeugung eines Ionenstrahls umfassen, der im Betrieb in Richtung auf die zu beschichtende Seite gerichtet ist, um das Substrat mittels Plasma-Ionenunterstützten Aufdampfens (PIAD) mit der dotierten Glasschicht zu beschichten.

Soweit die Herstellung eines strukturierten Lumineszenzstandards auf einem Substrat gewünscht ist, so wird das Substrat zunächst mittels eines üblichen Maskierungsverfahrens mit einer Maskierung versehen, die nach der Beschichtung zumindest teilweise wieder entfernt wird.

## Patentansprüche

1. Verwendung eines Materials als Lumineszenzstandard zur Referenzierung von Lumineszenzsignalen, wobei das Material ein optisch transparentes Basismaterial umfasst, das aus einem Lanthan-Phosphat-Glas, einem Fluor-Phosphat-Glas, einem Fluor-Kronglas, einem Lanthanglas, einer daraus gebildeten Glaskeramik oder aus einer Lithium-Aluminosilikat-Glaskeramik gebildet ist, sowie eine Volumendotierung des Basismaterials mit zumindest einem Seltenerdmetall und/oder einem Buntmetall aufweist, die fluoreszierend oder lumineszierend ist.

2. Verwendung nach Anspruch 1, wobei das Buntmetall Kobalt, Chrom und/oder Mangan ist.

3. Verwendung nach Anspruch 1 oder 2, wobei das Basismaterial ein Lanthan-Phosphat-Glas ist, das 30 bis 90 Gew.-% P₂O₅, vorzugsweise 50 bis 80 Gew.-%, besonders bevorzugt 60 bis 75 Gew.-% P₂O₅, sowie Läutermittel in üblichen Mengen enthält.

4. Verwendung nach einem der vorhergehenden Ansprüche, wobei das Basismaterial ein Lanthan-Phosphat-Glas ist, das 1 bis 30 Gew.-% La₂O₃, vorzugsweise 5 bis 20 Gew.-%, besonders bevorzugt 8 bis 17 Gew.-% La₂O₃ enthält.

5. Verwendung nach Anspruch 3 oder 4, wobei das Basismaterial 1 bis 20 Gew.-% Al₂O₃, vorzugsweise 5 bis 15 Gew.-% Al₂O₃ enthält.

6. Verwendung nach einem der Ansprüche 3 bis 5, wobei das Basismaterial 1 bis 20 Gew.-% an R₂O enthält, wobei R mindestens ein aus der Gruppe der Alkalimetalle ausgewähltes Element ist.

7. Verwendung nach Anspruch 6, wobei das Basismaterial 1 bis 20 Gew.-% K₂O, vorzugsweise 5 bis 15 Gew.-% K₂O enthält.

8. Verwendung nach einem der vorhergehenden Ansprüche, wobei das Basismaterial mit einer Dotierung aus Cr₂O₃, vorzugsweise mit 0,01 bis 5 Gew.-%, besonders bevorzugt mit 0,02 bis 2 Gew.-% Cr₂O₃ versehen ist.

9. Verwendung nach einem der vorhergehenden Ansprüche, wobei das Basismaterial mit einer Dotierung versehen ist, die Ce₂O₃, Eu₂O₃, Tb₂O₃ oder Tm₂O₃ enthält.

10. Verwendung nach Anspruch 1, 2, 8 oder 9, wobei das Basismaterial ein Fluor-Phosphat-Glas mit 5 bis 40 Gew.-% P₂O₅ und einem Fluoridgehalt von 60 bis 95 Gew.-% ist.

11. Verwendung nach einem der vorhergehenden Ansprüche, wobei das Basismaterial mit 0,01 bis 5 Gew.-%, vorzugsweise mit 0,05 bis 2 Gew.-% an Er₂O₃ und/oder Eu₂O₃ dotiert ist.

12. Verwendung nach Anspruch 11, wobei das Basismaterial mit 0,05 bis 0,3 Er₂O₃ und 0,5 bis 2 Gew.-% Eu₂O₃, vorzugsweise mit etwa 0,1 Gew.-% Er₂O₃ und etwa 1 Gew.% Eu₂O₃ dotiert ist.

13. Verwendung nach einem der Ansprüche 1, 2, 8, 9, 11 oder 12, wobei das Basismaterial ein optisches Fluor-Kronglas, insbesondere FK-52 oder FK51, oder ein Lanthanglas, insbesondere LAK-8, ist.

14. Verwerdung nach Anspruch 13, wobei das Basismaterial ein optisches Glas ist, 0,5 bis 2 Gew.-% La₂O₃, 10 bis 20 Gew.-% B₂O₃, 5 bis 25 Gew.-% SiO₂, 10 bis 30 Gew.% SrO, 2 bis 10 Gew.-% CaO, 10 bis 20 Gew.-% BaO, 0,5 bis 3 Gew.-% Li₂O, 1 bis 5 Gew.-% MgO und 20 bis 50 % Gew.-% F und Läutermittel in üblichen Mengen enthält.

15. Verwendung nach Anspruch 13, wobei das Basismaterial ein optisches Glas ist, das 30 bis 60 Gew.-% La₂O₃, 30 bis 50 Gew.-% B₂O₃, 1 bis 5 Gew.-% SiO₂, 1 bis 15 Gew.-% ZnO, 2 bis 10 Gew.-% CaO sowie Läutermittel in üblichen Mengen enthält.

16. Verwendung nach Anspruch 13, 14 oder 15, wobei die Dotierung 3 bis 100 ppm an Buntmetallen, vorzugsweise an Kobalt, Chrom und/oder Mangan aufweist.

17. Verwendung nach Anspruch 1 oder 2, wobei das Basismaterial aus einer Glaskeramik, insbesondere einer Lithium-Aluminosilikat-Glaskeramik wie Robax^{®} oder Cleartrans^{®} besteht und eine Dotierung aufweist, die Eu₂O₃, Er₂O₃ und/oder Sm₂O₃ enthält.

18. Verwendung nach Anspruch 17, wobei die Dotierung 0,1 bis 5 Gew.-% Eu₂O₃, 0,01 bis 0,5 Gew.-% Er₂O₃ und/oder 0,1 bis 2 Gew.-% Sm₂O₃ enthält.

19. Verwendung nach einem der vorhergehenden Ansprüche, wobei das Basismaterial aus Rohstoffen hergestellt ist, die höchstens 100 ppm an seltenen Erden enthalten.

20. Verwendung nach einem der vorhergehenden Ansprüche, wobei das Basismaterial einen Wassergehalt von weniger als 0,1 Gew.-%, vorzugsweise von weniger als 0,01 Gew.-% aufweist.

21. Verwendung nach einem der vorhergehenden Ansprüche, wobei das Material als selbsttragender Körper ausgebildet ist.

22. Verwendung nach einem der Ansprüche 1 bis 20, wobei das Material ferner ein Substrat aus einem im Wesentlichen nicht fluoreszierenden oder lumineszierenden Material umfasst, auf dem das Basismaterial mit der Dotierung aufgebracht ist.

23. Verwendung nach Anspruch 22, wobei das Basismaterial mit der Dotierung als durchgehende Beschichtung auf dem Substrat aufgenommen ist.

24. Verwendung nach Anspruch 22, wobei das Basismaterial mit der Dotierung als strukturierte Beschichtung auf dem Substrat aufgenommen ist.

25. Verwendung nach einem der Ansprüche 1 bis 24 als Lumineszenzstandard für die Charakterisierung der Langzeitstabilität von Lumineszenzmesssystemen.

26. Verwendung nach einem der Ansprüche 1 bis 24 als Wellenlängenstandard, als Lumineszenzintensitäts- und Lumineszenzlebensdauerstandard für den UV- bis NIR-Spektralbereich oder als Standard für eine Standardisierung von Lumineszenzmessdaten verschiedener optischer Geräte.

27. Verwendung nach einem der Ansprüche 1 bis 24 als Standard für die Charakterisierung und Kalibrierung von Lumineszenzmessystemen mit zeitaufgelöster Lumineszenzdetektion im UV- bis NIR-Spektralbereich.

28. Verwendung nach einem der Ansprüche 1 bis 24 als Standard für die Charakterisierung der Eigenlumineszenz von Materialien im UV- bis NIR-Spektralbereich von 250 - 1700 nm.

## Claims

1. Use of a material as a luminescence standard for referencing luminescence signals, wherein the material comprises an optically-transparent base material, which is formed from a lanthanum-phosphate glass, a fluoro-phosphate glass, a fluoro-crown glass, a lanthanum glass, a glass-ceramic formed from these, or a lithium-alumino-silicate glass-ceramic, and provides a volume doping of the base material with at least one rare-earth metal and/or a nonferrous heavy metal, which is fluorescent or luminescent.

2. Use according to claim 1, wherein the nonferrous heavy metal is cobalt, chromium and/or manganese.

3. Use according to claim 1 or 2, wherein the base material is a lanthanum-phosphate glass, which contains 30 to 90% by weight P₂O₅, preferably 50 to 80% by weight, by particular preference 60 to 75% by weight P₂O₅, together with fining agents in conventional quantities.

4. Use according to any one of the preceding claims, wherein the base material is a lanthanum-phosphate glass, which contains 1 to 30% by weight La₂O₃, preferably 5 to 20% by weight, by particular preference 8 to 17% by weight La₂O₃.

5. Use according to claim 3 or 4, wherein the base material contains 1 to 20% by weight Al₂O₃, preferably 5 to 15% by weight Al₂O₃.

6. Use according to any one of claims 3 to 5, wherein the base material contains 1 to 20% by weight R₂O, wherein R is an element selected from the group of alkali metals.

7. Use according to claim 6, wherein the base material contains 1 to 20% by weight K₂O, preferably 5 to 15% by weight K₂O.

8. Use according to any one of the preceding claims, wherein the base material is provided with a doping of Cr₂O₃, preferably with 0.01 to 5% by weight, by particular preference with 0.02 to 2% by weight Cr₂O₃.

9. Use according to any one of the preceding claims, wherein the base material is provided with a doping, which contains Ce₂O₃, Eu₂O₃, Tb₂O₃ or Tm₂O₃.

10. Use according to claim 1, 2, 8 or 9, wherein the base material is a fluoro-phosphate glass with 5 to 40% P₂O₅ and a fluoride content of 60 to 95% by weight.

11. Use according to any one of the preceding claims, wherein the base material is doped with 0.01 to 5% by weight, preferably 0.05 to 2% by weight Er₂O₃ and/or Eu₂O₃.

12. Use according to claim 11, wherein the base material is doped with 0.05 to 0.3% by weight Er₂O₃ and 0.5 to 2% by weight Eu₂O₃, preferably with approximately 0.1% by weight Er₂O₃ and approximately 1% by weight Eu₂O₃.

13. Use according to any one of claims 1, 2, 8, 9, 11 or 12, wherein the base material is an optical fluoro-crown glass, in particular FK-52 or FK-51, or a lanthanum glass, in particular LAK-8.

14. Use according to claim 13, wherein the base material is an optical glass and contains 0.5 to 2% by weight La₂O₃, 10 to 20% by weight B₂O₃, 5 to 25% by weight SiO₂, 10 to 30% by weight SrO, 2 to 10% by weight CaO, 10 to 20% by weight BaO, 0.5 to 3% by weight Li₂O, 1 to 5% by weight MgO, 20 to 50% by weight F and fining agents in conventional quantities.

15. Use according to claim 13, wherein the base material is an optical glass, which contains 30 to 60% by weight La₂O₃, 30 to 50% by weight B₂O₃, 1 to 5% by weight SiO₂, 1 to 15% by weight ZnO, 2 to 10% by weight CaO and fining agents in conventional quantities.

16. Use according to claim 13, 14 or 15, wherein the doping provides 3 to 100 ppm nonferrous heavy metals, preferably cobalt, chromium and/or manganese.

17. Use according to claim 1 or 2, wherein the base material consists of a glass-ceramic, in particular, a lithium-alumino-silicate glass-ceramic such as Robax^{®} or Cleartrans^{®} and provides a doping, which contains Eu₂O₃, Er₂O₃ and/or Sm₂O₃.

18. Use according to claim 17, wherein the doping contains 0.1 to 5% by weight Eu₂O₃, 0.01 to 0.5% by weight Er₂O₃ and/or 0.1 to 2% by weight Sm₂O₃.

19. Use according to any one of the preceding claims, wherein the base material is manufactured from raw materials, which contain a maximum of 100 ppm rare earths.

20. Use according to any one of the preceding claims, wherein the base material provides a water content of less than 0.1% by weight, preferably less than 0.01% by weight.

21. Use according to any one of the preceding claims, wherein the material is formed as a self-supporting body.

22. Use according to any one of claims 1 to 20, wherein the material furthermore comprises a substrate made of a substantially non-fluorescent or non-luminescent material, to which the base material with the doping is applied.

23. Use according to claim 22, wherein the base material with the doping is taken up as a continuous coating on the substrate.

24. Use according to claim 22, wherein the base material with the doping is taken up as a structured coating on the substrate.

25. Use according to any one of claims 1 to 24 as a luminescence standard for the characterisation of the long-term stability of luminescence measuring systems.

26. Use according to any one of claims 1 to 24 as a wavelength standard, as a luminescence-intensity and luminescence-lifetime standard for the UV to NIR spectral range or as a standard for standardisation of luminescence-measuring data of various optical devices.

27. Use according to any one of claims 1 to 24 as a standard for the characterisation and calibration of luminescence-measuring systems with time-resolved luminescence detection within the UV to NIR spectral range.

28. Use according to any one of claims 1 to 24 as a standard for the characterisation of the intrinsic luminescence of materials within the UV to NIR spectral range of 250-1700 nm.

## Revendications

1. Utilisation d'un matériau comme standard de luminescence pour servir de référence à des signaux de luminescence, le matériau comprenant un matériau de base optiquement transparent qui est formé d'un verre au phosphate de lanthane, d'un verre au fluorophosphate, d'un verre au fluor crown, d'un verre au lanthane, d'une vitrocéramique formée à partir de ceux-ci ou d'une vitrocéramique au silicate de lithium - aluminium, et qui présente un dopage volumique du matériau de base avec au moins un métal de terre rare et/ou un métal non ferreux, lequel dopage volumique est fluorescent ou luminescent.

2. Utilisation selon la revendication 1, le métal non ferreux étant du cobalt, du chrome et/ou du manganèse.

3. Utilisation selon la revendication 1 ou 2, le matériau de base étant un verre au phosphate de lanthane qui contient 30 à 90 %, en pourcentage pondéral, de P₂O₅, de préférence 50 à 80 %, en pourcentage pondéral, de P₂O₅, particulièrement de préférence 60 à 75 %, en pourcentage pondéral, de P₂O₅, ainsi qu'un agent d'affinage en quantité usuelle.

4. Utilisation selon l'une des revendications précédentes, le matériau de base étant un verre au phosphate de lanthane qui contient 1 à 30 %, en pourcentage pondéral, de La₂O₃, de préférence 5 à 20 %, en pourcentage pondéral, de La₂O₃, particulièrement de préférence 8 à 17 %, en pourcentage pondéral, de La₂O₃.

5. Utilisation selon la revendication 3 ou 4, le matériau de base contenant 1 à 20 %, en pourcentage pondéral, de Al₂O₃, de préférence 5 à 15 %, en pourcentage pondéral, de Al₂O₃.

6. Utilisation selon l'une des revendications 3 à 5, le matériau de base contenant 1 à 20 %, en pourcentage pondéral, de R₂O, R étant au moins un élément sélectionné dans le groupe des métaux alcalins.

7. Utilisation selon la revendication 6, le matériau de base contenant 1 à 20 %, en pourcentage pondéral, de K₂O, de préférence 5 à 15 %, en pourcentage pondéral, de K₂O.

8. Utilisation selon l'une des revendications précédentes, le matériau de base étant pourvu d'un dopage en Cr₂O₃, de préférence avec 0,01 à 5 %, en pourcentage pondéral, particulièrement de préférence avec 0,02 à 2 %, en pourcentage pondéral, de Cr₂O₃.

9. Utilisation selon l'une des revendications précédentes, le matériau de base étant pourvu d'un dopage qui contient Ce₂O₃, Eu₂O₃, Tb₂O₃ ou Tm₂O₃.

10. Utilisation selon la revendication 1, 2, 8 ou 9, le matériau de base étant un verre au fluorophosphate avec 5 à 40 %, en pourcentage pondéral, de P₂O₅ et avec une teneur en fluorure de 60 à 95 %, en pourcentage pondéral.

11. Utilisation selon l'une des revendications précédentes, le matériau de base étant dopé avec 0,01 à 5 %, en pourcentage pondéral, de préférence avec 0,05 à 2 %, en pourcentage pondéral, de Er₂O₃ et/ou Eu₂O₃.

12. Utilisation selon la revendication 11, le matériau de base étant dopé avec 0,05 à 0,3 %, en pourcentage pondéral, de Er₂O₃ et avec 0,5 à 2 %, en pourcentage pondéral, de Eu₂O₃, de préférence avec environ 0,1 %, en pourcentage pondéral, de Er₂O₃ et avec environ 1 %, en pourcentage pondéral, de Eu₂O₃.

13. Utilisation selon l'une des revendications 1, 2, 8, 9, 11 ou 12, le matériau de base étant un verre au fluor crown optique, notamment FK-52 ou FK-51, ou un verre au lanthane, notamment LAK-8.

14. Utilisation selon la revendication 13, le matériau de base étant un verre optique qui contient, à chaque fois en pourcentage pondéral, 0,5 à 2 % de La₂O₃, 10 à 20 % de B₂O₃, 5 à 25 % de SiO₂, 10 à 30 % de SrO, 2 à 10 % de CaO, 10 à 20 % de BaO, 0,5 à 3 % de Li₂O, 1 à 5 % de MgO et 20 à 50 % de F ainsi qu'un agent d'affinage en quantité usuelle.

15. Utilisation selon la revendication 13, le matériau de base étant un verre optique qui contient, à chaque fois en pourcentage pondéral, 30 à 60 % de La₂O₃, 30 à 50 % de B₂O₃, 1 à 5 % de SiO₂, 1 à 15 % de ZnO, 2 à 10 % de CaO ainsi qu'un agent d'affinage en quantité usuelle.

16. Utilisation selon la revendication 13, 14 ou 15, le dopage ayant 3 à 100 ppm de métaux non ferreux, de préférence de cobalt, de chrome et/ou de manganèse.

17. Utilisation selon la revendication 1 ou 2, le matériau de base étant constitué d'une vitrocéramique, notamment d'une vitrocéramique au silicate de lithium - aluminium telle que Robax^{®} ou Cleartrans^{®}, et ayant un dopage qui contient Eu₂O₃, Er₂O₃ et/ou Sm₂O₃.

18. Utilisation selon la revendication 17, le dopage contenant, à chaque fois en pourcentage pondéral, 0,1 à 5 % de Eu₂O₃, 0,01 à 0,5 % de Er₂O₃ et/ou 0,1 à 2 % de Sm₂O₃.

19. Utilisation selon l'une des revendications précédentes, le matériau de base étant fabriqué à partir de matières premières qui contiennent au maximum 100 ppm de terres rares.

20. Utilisation selon l'une des revendications précédentes, le matériau de base ayant une teneur en eau de moins de 0,1 % en pourcentage pondéral, de préférence de moins de 0,01 % en pourcentage pondéral.

21. Utilisation selon l'une des revendications précédentes, le matériau étant conçu comme un corps autoporteur.

22. Utilisation selon l'une des revendications 1 à 20, le matériau comprenant en plus un substrat en un matériau globalement non fluorescent ou luminescent sur lequel le matériau de base avec le dopage est appliqué.

23. Utilisation selon la revendication 22, le matériau de base avec le dopage étant reçu comme revêtement continu sur le substrat.

24. Utilisation selon la revendication 22, le matériau de base avec le dopage étant reçu comme revêtement structuré sur le substrat.

25. Utilisation selon l'une des revendications 1 à 24 comme standard de luminescence pour la caractérisation de la stabilité à long terme de systèmes de mesure de luminescence.

26. Utilisation selon l'une des revendications 1 à 24 comme standard de longueur d'onde, comme standard d'intensité de luminescence et de durée de vie de luminescence pour le domaine spectral UV à NIR ou comme standard pour une standardisation de données de mesure de luminescence de différents appareils optiques.

27. Utilisation selon l'une des revendications 1 à 24 comme standard pour la caractérisation et le calibrage de systèmes de mesure de luminescence avec détection de luminescence à résolution dans le temps dans le domaine spectral UV à NIR.

28. Utilisation selon l'une des revendications 1 à 24 comme standard pour la caractérisation de la luminescence propre de matériaux dans le domaine spectral UV à NIR de 250 à 1 700 nm.
